(19) Europäisches Patentamt
European Patent Office
Office européen des brevets

(11) EP 1 260 323 B1

(12) **EUROPÄISCHE PATENTSCHRIFT**

(45) Veröffentlichungstag und Bekanntmachung des Hinweises auf die Patenterteilung:
**10.12.2008 Patentblatt 2008/50**

(21) Anmeldenummer: **02011324.7**

(22) Anmeldetag: **23.05.2002**

(51) Int Cl.:
**B25J 9/16** (2006.01)

(54) **Verfahren zum Steuern der Bewegung eines Roboters**

Method for controlling the motion of a robot

Méthode de commande de déplacement d'un robot

(84) Benannte Vertragsstaaten:
**AT BE CH CY DE DK ES FI FR GB GR IE IT LI LU MC NL PT SE TR**

(30) Priorität: **25.05.2001 DE 10125445**

(43) Veröffentlichungstag der Anmeldung:
**27.11.2002 Patentblatt 2002/48**

(73) Patentinhaber: **KUKA Roboter GmbH**
**86165 Augsburg (DE)**

(72) Erfinder:
- **Weiss, Martin**
  **86459 Margertshausen (DE)**
- **Finsterwalder, Thomas**
  **86179 Augsgurg (DE)**
- **Merk, Günther**
  **86450 Altenmünster (DE)**

(74) Vertreter: **Lempert, Jost et al**
**Patentanwälte,**
**Dipl.-Ing. Heiner Lichti,**
**Dipl.-Phys. Dr. rer. nat. Jost Lempert,**
**Dipl.-Ing. Hartmut Lasch,**
**Postfach 41 07 60**
**76207 Karlsruhe (DE)**

(56) Entgegenhaltungen:
**EP-A- 0 507 531          EP-A- 0 879 119**
**WO-A-90/04500          DE-A1- 19 800 552**

- **MECKL P H ET AL: "EXPERIMENTAL EVALUATION OF SHAPED INPUTS TO REDUCE VIBRATION FOR A CARTESIAN ROBOT" JOURNAL OF DYNAMIC SYSTEMS, MEASUREMENT AND CONTROL, FAIRFIELD, NJ, US, Bd. 112, Nr. 2, Juni 1990 (1990-06), Seiten 159-165, XP000952413 ISSN: 0022-0434**

# Beschreibung

Die Erfindung betrifft ein Verfahren zum Steuern der Bewegung eines Roboters.

Beim Einsatz von Robotern, insbesondere Industrierobotern muss ein ausreichendes Maß an Sicherheit auch bei Fehlern, insbesondere Fehlbedienungen gegeben sein. So besteht grundsätzlich die Gefahr, das ein Bediener eine Achse falsch justiert oder unzulässige Werte für den Softwareendschalter außerhalb des Betriebsbereichs mechanisch vorgesehener Anschläge oder Puffer programmiert. In beiden Fällen besteht die Gefahr, dass beim Abfahren eines so fehlerprogrammierten Ablaufs eine Achse aus dem mechanisch zulässigem Bereich heraus bewegt wird, da die von der Steuerungssoftware angenommene Übereinstimmung der steuerungsinternen Position mit der mechanischen Position nicht mehr gegeben ist. Als Sicherheit gegen solche Fehler und Fehlbedienungen sind am Roboter mechanische Strukturen, wie in der Form von Pufferanschläge, angebracht, wenn die Bewegung eines Roboterteils zu den vor ihm angeordneten Teilen begrenzt werden soll. So können sich am Robotersockel entsprechende mechanische Puffer für die Karussellbewegung oder aber am oberen Ende der Schwinge mechanische Puffer für den an diesem Ende angelenkten weiteren Roboterarm befinden.

Bei den angesprochenen Fehlern fährt der Roboter eine Kollision, auch als "Crash" bezeichnet, d.h. das kollidierende Glied der Robotermechanik fährt gegen einen ihm und seiner Achse zugeordneten mechanischen Puffer; der Puffer wird beim Crash irreversibel verformt. Der Puffer darf bei diesem Vorgang zerstört werden und muss nach dem Crash in jedem Fall ausgetauscht werden. Bei dieser Verformung wird kinetische Energie des Roboters in innere Energie (Wärme) und Verformungsarbeit des Puffers umgewandelt. Wichtig ist der Schutz des Roboters selbst. Daraufhin löst die Steuerungs-Software eine Stopreaktion aus. Insgesamt kommt der Roboter auch bei dieser schweren Ausnahmesituation ohne Beschädigung seiner Mechanik zum Halt. Durch die mechanischen Puffer kann allerdings ohne mechanische Beschädigung von Roboterelementen nur eine begrenzte Energie aufgenommen werden. Eine Überschreitung der maximal ohne Beschädigung von Roboterelementen aufnehmbare Energie und damit eine Beschädigung der solchen muss sicher ausgeschlossen werden. Es werden daher grundsätzliche Vorkehrungen getroffen, so dass bei allen Bewegungen bei den beschriebenen Fehlersituationen bei einer Kollision eine Beschädigung ausgeschlossen ist. Hierbei wird bisher eine Kombination aus maximaler Last, maximaler Ausladung und maximaler Geschwindigkeit für eine Bewegung um eine Achse zugrunde gelegt. Diese Maximalwerte werden seitens des Roboterherstellers derart ermittelt, dass mit den entsprechenden Werten "Worst-Case"-Versuche gefahren werden, um festzustellen, bis zu welchen Parametern gegen den mechanischen Puffer wiederholt ohne Beschädigungen gefahren werden kann. Es wird dann angenommen, das auch beim Anwender im Falle einer Fehlfunktion die Energieaufnahmemöglichkeit des Puffers nicht überschritten wird, die im Crashfall relevanten Parameter nicht alle gleichzeitig ihr Maximum erreichen. Dies führt allerdings dazu, dass die vorgegebene maximale Achsgeschwindigkeit an die Maximallast geknüpft ist. Selbst wenn der Roboter aufgrund seiner sonstigen mechanischen Auslegung höhere Geschwindigkeiten erreichen könnte, müssen diese von der Steuerungs-Software abgelehnt werden, da dabei Schäden an der Struktur nicht ausgeschlossen werden können. Darüber hinaus werden Bewegungen mit kleiner Last bzw. mit geringer Ausladung durch die bei maximaler Last und Ausladung ermittelte maximale Achsgeschwindigkeit unnötig langsam gefahren.

Dokument EP0507531 A1 offenbart ein Verfahren zum Steuern der Bewegung eines Roboters, wobei die kinetische Energie von bewegten Robotergliedern um eine Achse und die maximale Leistung der Achsenantriebe zur Erzeugung von Beschleunigungs- und Verzögerungsmustern der Robotersteuerung dienen (Anspruch 2, insb. Schritte (b)-(d)). Die Frage einer Kollision oder eines Zusammenstoßes ist in der genannten Druckschrift nicht angesprochen.

Der Erfindung liegt daher die Aufgabe zugrunde, unter Vermeidung der vorgenannten Nachteile ein Verfahren zur Steuerung eines Roboters zu schaffen, bei dem unter Optimierung der Betriebsparameter des Roboters, insbesondere geringer Taktzeiten und Möglichkeit zur Bewegung großer Traglast eine Zerstörung des Roboters dennoch zuverlässig ausgeschaltet ist.

Erfindungsgemäß wird die genannte Aufgabe bei einem Verfahren der eingangs genannten Art dadurch gelöst, dass kinetische Energie von bewegten Robotergliedern ($g_1$,..., $g_{i-1}$, $g_i$, $g_{i+1}$,..., $g_n$) um eine Achse ($A_i$) auf die durch eine der entsprechenden Achse ($A_i$) zugeordnete mechanische Struktur beschädigungsfrei aufnehmbare Grenzenergie begrenzt wird.

Die Erfindung beinhaltet also die Planung einer Bahnbewegung unter Reduzierung der Geschwindigkeit auf der Bahn, so dass die physikalische kinetische Energie, die bei Kollision einer Achse gegen mechanische Anschläge in innere Energie umgewandelt wird, einen vorgegebenen Wert nicht überschreitet.

Erfindungsgemäß werden also die Achsgeschwindigkeiten begrenzt unter der Nebenbedingung, dass die Energiegrenzen, bestimmt durch Belastbarkeit der mechanischen Struktur, Geschwindigkeit, Last und Ausladung, eingehalten werden. Beschädigungsfrei aufnehmbare Grenzenergie bezeichnet hierbei die Grenzenergie, die herstellerseitig dahingehend, insbesondere durch Versuche, ermittelt wurde, dass bei ihr eine Beschädigung irgendwelcher Roboterelemente zuverlässig ausgeschlossen ist.

In einer bevorzugten Ausgestaltung der Erfindung ist dabei vorgesehen, dass die von einer einer entsprechenden Achse ($A_i$) zugeordneten mechanischen

Struktur aufzunehmende kinetische Energie der Roboterglieder ($g_1,..., g_{i-1}, g_i, g_{i+1},..., g_n$) jeder Achse ($A_i$) auf die durch die mechanische Struktur beschädigungsfrei aufnehmbare Grenzenergie beschränkt wird. Aufzunehmende Energie ist diejenige die auf die Struktur tatsächlich einwirkt.

Eine bevorzugte Weiterbildung sieht vor, dass die kinetische Energie in Abhängigkeit der bewegten Massen und/oder des Trägheitsensors begrenzt wird.

Dem liegt zugrunde, dass festgestellt wurde, das im Falle eines Crashs nicht die gesamte kinetische Energie des Roboters aufzunehmen ist, da nur die kinetische Energie der Auftreffkomponente auf den Puffer von diesem aufzunehmen ist und das Glied innerhalb einer kurzen Kollisionszeit zum Stillstand kommen, während sich die restlichen Glieder des Roboters weiter bewegen. So bewegt sich bei Kollision der Schwinge aufgrund ihrer Bewegung um die A2-Achse der Roboterarm um seine A3-Achse weiter. Ebenso bewegt sich bei Kollision des Karussells während einer Bewegung um die A1-Achse die Roboterhand um die A6-Achse weiter, wenn Achse 1 und Achse 6 auf einer Geraden liegen. Die von einer Kollision betroffene Struktureinheit muss also nur einen Teil der gesamten kinetischen Energie aufnehmen, die im Gesamtsystem Roboter vorliegt: Die Energie eines Roboterglieds hängt von den Geschwindigkeiten lediglich der Gelenke in der kinematischen Kette bis einschließlich zu diesem Glied ab. Aus diesem Grunde muss die gesamte Energie auch nur insofern begrenzt werden, als die von der mechanischen Struktur tatsächlich aufzunehmende Energie von diesem zerstörungsfrei aufgenommen werden kann, also die Energieaufnahmekapazität nicht überschreitet. Auf die von der mechanischen Struktur aufnehmbare Energie muss also nur ein Teil der gesamten kinetischen Energie begrenzt werden; diese kann also größer gewählt werden als wenn sie selbst auf den Wert begrenzt wird, den die Struktur zerstörungsfrei aufnehmen kann. Hiermit können die Dynamikgrenzen des Roboters erweitert werden.

Erfindungsgemäß erfolgen also eine funktionelle situationsabhängige Überwachung und Planung der kinetischen Energie des Roboters und gegebenenfalls Begrenzungen. Hierbei wird die Achsgeschwindigkeit zustandsabhängig reduziert, indem vor Ausführung eines Bewegungsbefehls rechnerisch unter Berücksichtigung der Roboterstellung und der Nutzlast die kinetische Energie in Abhängigkeit von der programmierten Achsgeschwindigkeit bestimmt wird. Gegebenenfalls, bei Überschreiten der maximal zulässigen Energie wird die Maximalgeschwindigkeit der betroffenen Achse entsprechend reduziert.

Hierdurch wird ein Nutzenvorteil bei Robotervarianten durch höherer Nutzlast, Armverlängerung oder dergleichen erzielt, da die Begrenzung der maximalen Achsgeschwindigkeiten nur in den Zuständen erfolgt, in denen tatsächlich zu hohe kinetische Energie auftreten würde.

Weitere Merkmale ergeben sich aus folgender Beschreibung, in der in einer vereinfachten Darstellung alle für den Algorithmus relevanten Kollisionssituationen bei rotatorischen Achsen exemplarisch dargestellt sind.

Dabei zeigt:

Fig. 1 eine Seitenansicht eines Roboters mit vertikal gerichteter Schwinge und demgemäß geringer Ausladung;

Fig. 2 eine Seitenansicht eines Roboters mit maximaler Auslandung bei sowohl horizontal gerichteter Schwinge als auch horizontal gerichtetem Arm;

Fig. 3 eine schematische Darstellung der Situation bei einer Kollision bei der Bewegung des Karussell seines Roboters um die A1-Achse;

Fig. 4 eine schematische Darstellung zur Kollisions-Situation bei der Kollision der Schwinger eines Roboters bei seiner Bewegung um die A2-Achse;

Fig. 5 eine spezielle Situation der Zuordnung an Achse A6 zur Achse A1 des Roboters bei der Kollision des Karussells bei seiner Bewegung um die A1-Achse, wobei sich die A6-Achse auf einer Geraden mit der A1Achse befindet; und

Fig. 6 ein Ablauf-Diagramm einer bevorzugten Ausgestaltung des erfindungsgemäßen Verfahrens.

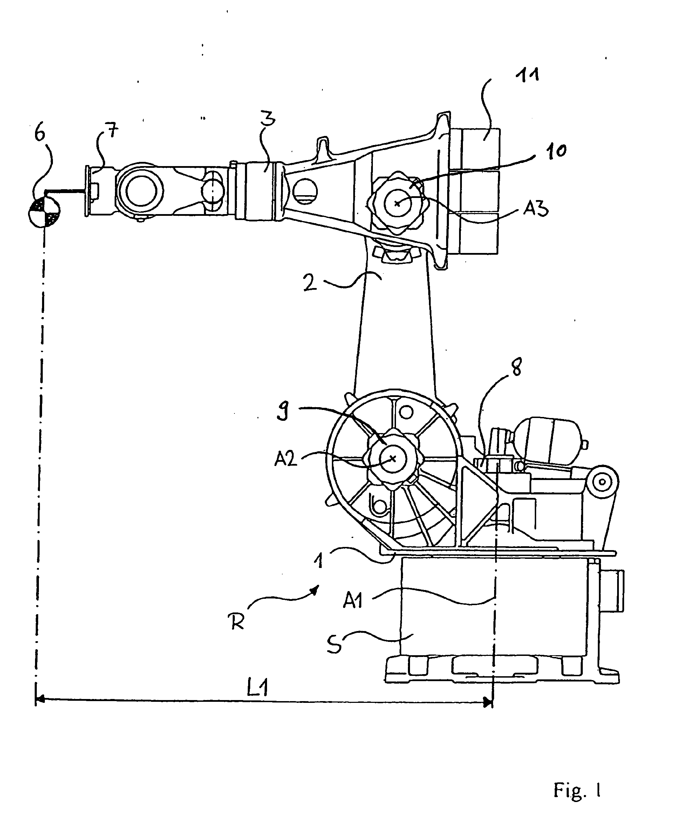

Fig. 1 zeigt einen Roboter R mit einem stationären Sockel S, einen auf diesem befindlichen ersten Roboterglied 1 in Form eines Karussells, welches um die vertikale A1-Achse des Roboters R drehbar ist, mit einem um die horizontale Achse A2 verschwenkbaren Roboterglied 2, sowie einem freien am Ende der Schwinge 2 um die Achse A3 verschwenkbaren weiteren Roboterglied 3, dem Roboterarm. An dessen freien Ende findet sich eine Roboterhand 7, die ein Werkstück 6 trägt. Mit 8 ist ein Motor zur Drehung der Schwinge 1 um die A1-Achse bezeichnet. 9 bezeichnet einen Motor zur Drehbewegung der Schwinge 2 um die A2-Achse. 10 gibt den Motor für den Arm 3 an und 11 gibt die Motoren zur Bewegung der Hand 7 an. In der Fig. 1 findet sich der Roboter mit einer relativ geringen Ausladung L1 zwischen A1-Achse und Werkstück 6, wobei sich die Schwinge sich in vertikaler Position befindet.

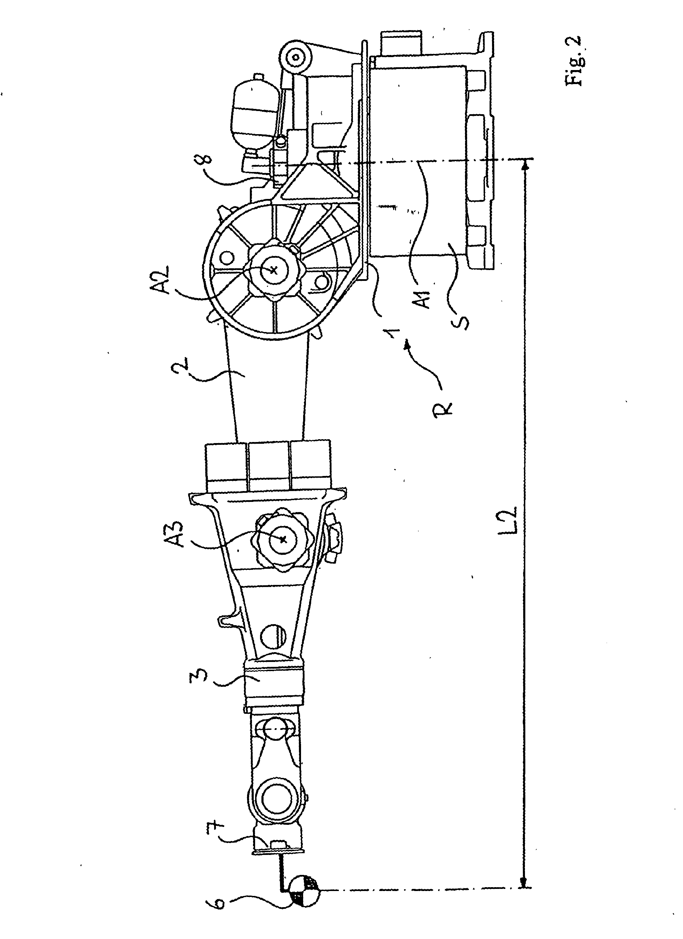

Fig. 2 zeigt den gleichen Roboter mit maximaler Ausladung L2, die dadurch erreicht wird, daß sowohl Schwinge 2 als auch Roboterarm 3 parallel in gleicher Richtung und horizontal gerichtet sind.

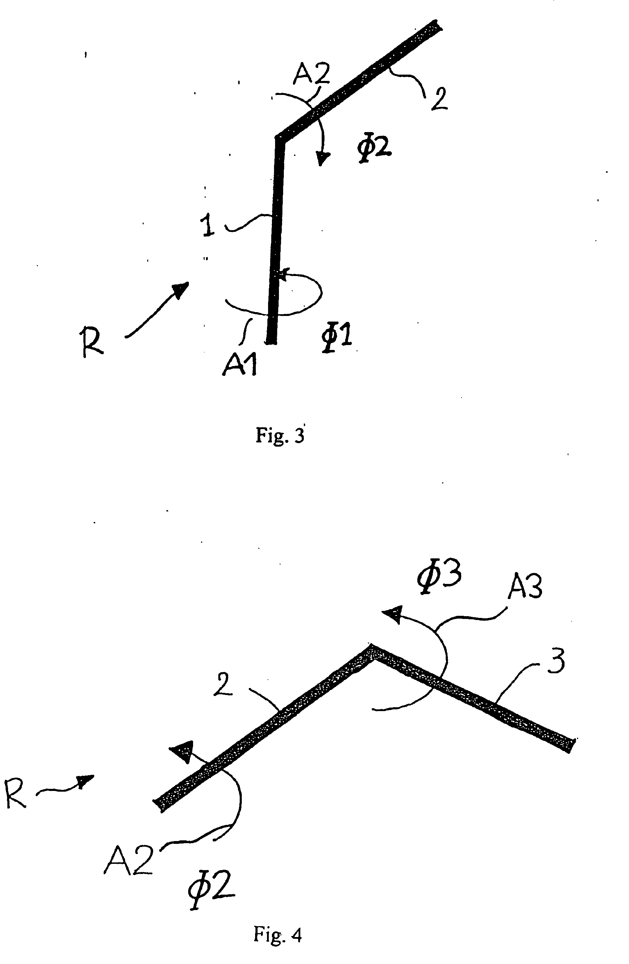

Bei der Kollision des Karussells eines Roboters R mit ihm zugeordneten mechanischen Strukturderivaten, wie Puffern oder Anschlägen (nicht dargestellt), bei einer Bewegung vom Glied 1 - des Karussells - um seine A1-Achse wird nur die Energie der Rotation der Massenträgheit von Glied 2 - Schwinge, sowie höhere Glieder - um Achse A1 mit $\frac{1}{2}J_{2,A2}\phi^2_1$ in die vom Puffer aufzunehmende Energie eingehen, nicht aber der Energieanteil in der Rotation der Massenträgheit von Glied 2 um die Achse A2 mit $\frac{1}{2}J_{2,A2}\phi^2_2$ (Figur 3).

Bei einer Kollision der Bewegung des Gliedes 2 (Schwinge 5) um seine Achse A2 wurde experimentell beobachtet, das sich die Achse A3 bzw. das Glied 3 - Roboterarm - um die Achse A3 während der Kollision weiterbewegt, selbst wenn eine Bewegung des Glieds 3 mit $V_3=0$ programmiert wurde (Figur 4).

Ein Teil der Bewegungsenergie des Gliedes 3, aufgrund derer (Mit-)Bewegungen um die Achse 2, wurde bei der Kollision in Energie einer Drehbewegung um die Achse A3 umgewandelt, bevor der Roboter stillgesetzt wurde. Diese Bewegungsenergie des Gliedes 3 um die Achse A3 muss daher nicht von der mechanischen Struktur aufgenommen werden. Der Anteil der Energie, die in Bewegung der Achse 3 umgewandelt wird, hängt im wesentlichen von den Wirkungsgraden der Getriebe und der Reibung im Antriebsstrang ab. Entsprechende Parameter werden vom Hersteller insbesondere durch Versuche ermittelt.

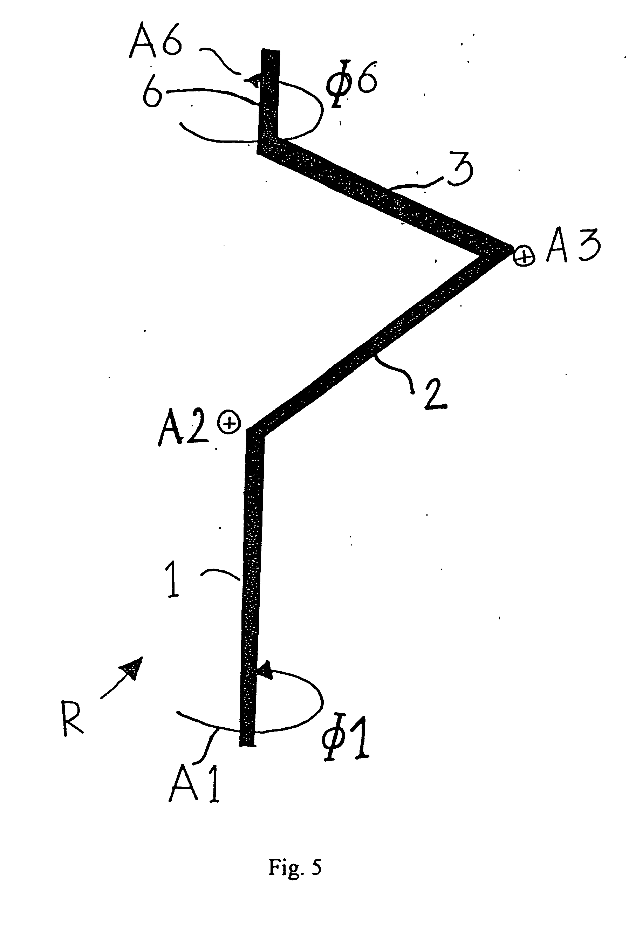

In der Figur 5 sind schematisch die Glieder eines Roboters in einer bestimmten Stellung dargestellt, nämlich in einer Stellung, bei der die Achse A1 und die Handachse A6 auf einer Gerade liegen. Hierbei ergibt die Kollision des Gliedes 1 - Karussell - des Roboters mit der Bewegung um der A1-Achse, dass in Abhängigkeit von Reibung im Antriebsstrang, Wirkungsgrad der Getriebe usw. der Teil der Energie in der Bewegung des Werkstücks 6 bei der Rotation um die Achse A6 erhalten bleibt und daher ebenfalls nicht von den der Achse A1 zugeordneten mechanischen Struktur aufgenommen werden muss.

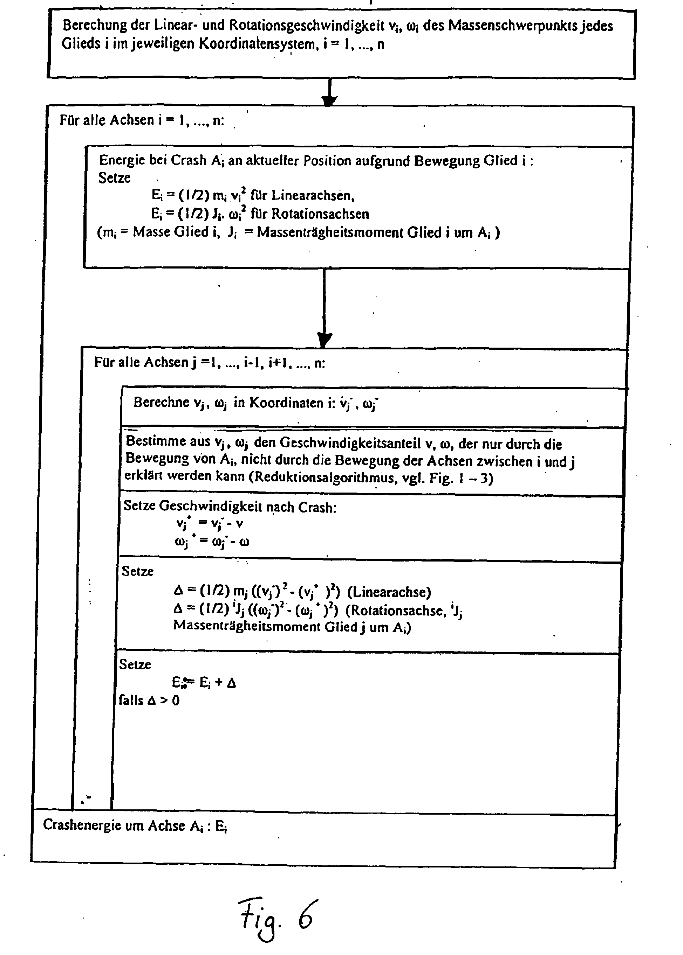

Die Fig. 6 zeigt ein Diagramm zum konkreten Ablauf des erfindungsgemäßen Verfahrens: Zunächst wird die Linear- und Rotationsgeschwindigkeit $V_i$, $\varpi_i$ für i=1, ..., n des Massenpunktes jedes Glieds i im jeweiligen Koordinatensystem bestimmt.

Sodann wird für sämtliche Achsen i-1...,n zunächst die Energie bei einer Kollision oder bei einem Crash $A_i$ an einer aktuellen Position aufgrund der Bewegung des Gliedes i bestimmt mit $E_i = (1/2)\,m_i v_i^2$ für Linearachsen,

$$E_i = (1/2)\,J_i \varpi_i$$ für Rotationsachsen festgelegt, wobei $m_i$ die Masse des Glieds i und $J_i$ das Massenträgheitsmoment des Glieds i um $A_i$ ist.

Sodann erfolgt für den Crash $A_i$, also des Gliedes i, für alle weiteren Achsen j=1,..., i-1, i+1,...,n die Berechnung von Linear- und Rotationsgeschwindigkeit $V_j$, $\varpi_j$ in Koordinaten des Gliedes i mit $V_j^-$ bzw. $\varpi_j^-$.

Im weiteren wird aus $V_j$, $\varpi_j$ der Geschwindigkeitsanteil V, $\varpi$, der nur durch die Bewegung von $A_i$, nicht der Bewegung der Glieder zwischen i und j (j wie vorstehend definiert) erklärt werden kann, bestimmt, wie dies unter Bezug auf die Fig. 1 bis 3 anhand konkreter Beispiele erläutert wurde.

Im weiteren wird die Geschwindigkeit nach dem Crash gesetzt als

$$V_j^+ = V_j^- - V$$

und die Winkelgeschwindigkeit

$$\varpi_j^+ = \varpi_j^- - \varpi$$

und für R-Achsen

$$\Delta = (1/2)\,m_j((V_j^-)^2 - (V_j^+)^2)$$

sowie für die Rotationsachse mit ${}^iJ_j$ als Masseträgheitsmoment des Gliedes J um die Achse $A_i$

$$\Delta = (1/2)\,{}^iJ_j((\varpi_j^-)^2 - (\varpi_j^+)^2).$$

Die Crashenergie $E_i$ um die Achse $A_i$ gesetzt auf

$$E_i = E_i + \Delta \text{ falls } \Delta > 0$$

Es zeigt sich, das nur ein Anteil der Linear- und Winkelgeschwindigkeit - und damit der Energie - eine Bewegung um die Achse, zu der ein Crash hinsichtlich der Energieaufnahme durch die mechanische Struktur berücksichtigt werden muss, da nur dieser Anteil eingeht, so dass eine entsprechende Reduktion der gesamten gegebenen Energie auf diese relevante Energie erfolgen kann. Dieser Sachverhalt gilt für Linearachsen und Drehachsen.

**Patentansprüche**

1. Verfahren zum Steuern der Bewegung eines Roboters, **dadurch gekennzeichnet, dass** die kinetische Energie von bewegten Robotergliedern ($g_1$,..., $g_{i-1}$, $g_i$, $g_{i+i}$,..., $g_n$) um eine Achse ($A_i$) bei einer Kollision auf die durch eine der entsprechenden Achse

($A_i$) zugeordnete mechanische Struktur beschädigungsfrei aufnehmbare Grenzenergie beschränkt wird.

2. Verfahren nach Anspruch 1, **dadurch gekennzeichnet, dass** die von einem einer entsprechenden Achse ($A_i$) zugeordnete mechanische Struktur aufzunehmende kinetische Energie der Roboterglieder ($g_1$,..., $g_{i-1}$, $g_i$, $g_{i+1}$,..., $g_n$) jeder Achse ($A_i$) auf die durch einen mechanischen Puffer beschädigungsfrei aufnehmbare Grenzenergie beschränkt wird.

3. Verfahren nach Anspruch 1 oder 2, **dadurch gekennzeichnet, dass** die kinetische Energie in Abhängigkeit der bewegten Massen und/oder des Trägheitstensors begrenzt wird.


**Claims**

1. Method for controlling the movement of a robot, **characterized in that** the kinetic energy of moving robot members ($g_1$, ..., $g_{i-1}$, $g_i$, $g_{i+1}$, ..., $g_n$) about an axis ($A_i$) is limited to the limiting energy absorbable in damage-free manner by a mechanical structure associated with the corresponding axis ($A_i$) in the case of a collision.

2. Method according to claim 1, **characterized in that** the kinetic energy of the robot members ($g_1$, ... $g_{i-1}$, $g_i$, $g_{i+1}$, ..., $g_n$) of each axis ($A_i$) to be absorbed by a mechanical structure associated with a corresponding axis is limited to the limiting energy absorbable in damage-free manner by a mechanical buffer.

3. Method according to claim 1 or 2, **characterized in that** the kinetic energy is limited as a function of the moving masses and/or the inertia tensor.


**Revendications**

1. Procédé pour piloter le mouvement d'un robot, **caractérisé en ce que** l'énergie cinétique des membres d'un robot ($g_1$,..., $g_{i-1}$, $g_i$, $g_{i+1}$,..., $g_n$) se déplaçant autour d'un axe ($A_1$) est limitée en cas de collision à l'énergie limite pouvant être absorbée sans dommage par une structure mécanique affectée à l'axe correspondant ($A_1$).

2. Procédé selon la revendication 1, **caractérisé en ce que** l'énergie cinétique devant être absorbée par une structure mécanique affectée à un axe correspondant ($A_1$) d'un des membres du robot ($g_1$,..., $g_{i-1}$, $g_i$, $g_{i+1}$,..., $g_n$) de chaque axe ($A_1$) à l'énergie limite pouvant être absorbée sans dommage par un amortisseur mécanique.

3. Procédé selon la revendication 1 ou 2, **caractérisé en ce que** l'énergie cinétique est limitée en fonction des masses déplacées et/ou du capteur d'inertie.

Fig. 1

Fig. 2

Fig. 3

Fig. 4

A6

6

$\phi 6$

3

$\oplus$ A3

2

A2 $\oplus$

1

R

$\phi 1$

A1

Fig. 5

Berechung der Linear- und Rotationsgeschwindigkeit $v_i$, $\omega_i$ des Massenschwerpunkts jedes Glieds i im jeweiligen Koordinatensystem, i = 1, ..., n

Für alle Achsen i = 1, ..., n:

Energie bei Crash $A_i$ an aktueller Position aufgrund Bewegung Glied i :
Setze
$$E_i = (1/2)\, m_i\, v_i^2 \text{ für Linearachsen,}$$
$$E_i = (1/2)\, J_i\, \omega_i^2 \text{ für Rotationsachsen}$$
($m_i$ = Masse Glied i, $J_i$ = Massenträgheitsmoment Glied i um $A_i$ )

Für alle Achsen j =1, ..., i-1, i+1, ..., n:

Berechne $v_j$, $\omega_j$ in Koordinaten i: $v_j^-$, $\omega_j^-$

Bestimme aus $v_j$, $\omega_j$ den Geschwindigkeitsanteil v, $\omega$, der nur durch die Bewegung von $A_i$, nicht durch die Bewegung der Achsen zwischen i und j erklärt werden kann (Reduktionsalgorithmus, vgl. Fig. 1 – 3)

Setze Geschwindigkeit nach Crash:
$$v_j^+ = v_j^- - v$$
$$\omega_j^+ = \omega_j^- - \omega$$

Setze
$$\Delta = (1/2)\, m_j\, ((v_j^-)^2 - (v_j^+)^2) \text{ (Linearachse)}$$
$$\Delta = (1/2)\, {}^iJ_j\, ((\omega_j^-)^2 - (\omega_j^+)^2) \text{ (Rotationsachse, } {}^iJ_j$$
Massenträgheitsmoment Glied j um $A_i$)

Setze
$$E_i := E_i + \Delta$$
falls $\Delta > 0$

Crashenergie um Achse $A_i$ : $E_i$

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0507531 A1